# EUROPEAN PATENT APPLICATION

(11) **EP 4 113 364 A1**
(43) Date of publication of application: **04.01.2023**
(21) Application number: 21182105.3
(22) Date of filing: 28.06.2021
(51) Int. Cl.: G06K 9/00

(54) **METHOD FOR DETECTING PRESENCE OF OBJECT IN VEHICLE**

(71) Applicant: Aptiv Technologies Limited, St. Michael (BB)
(72) Inventor: USZKUR, Marek, 32-020 Wieliczka (PL); BARTH, Alexander, 42929 Wermelskirchen (DE)
(74) Representative: Vigand, Philippe

(57) **Abstract**

A computer-implemented method for detecting the presence of an object for attention in a vehicle includes:
receiving data captured by at least one sensor device (30, 40) in the vehicle, processing (S3) the received data to collect a plurality of pieces of cue information that are indicative of the presence of said object for attention in the vehicle with a certain degree of uncertainty;
computing (S4) a confidence value for the presence of said object for attention in the vehicle, wherein the more pieces of cue information are collected the more the confidence value is increased;
comparing (S5) the confidence value with a threshold and detecting the presence of said object when the confidence value exceeds said threshold.

## Description

### TECHNICAL FIELD

The present disclosure relates to the field of detecting and managing the presence of an object for attention in a vehicle. The object for attention can be a child, an animal, a smartphone, or any other object that requires attention from the driver and/or other passenger(s) in the vehicle.

### BACKGROUND

In the automotive field, there is a desire to detect a child or an animal in the cabin of a vehicle to avoid that the child or animal is left in the vehicle and has a heatstroke or health issue after the driver has left the vehicle. It can only take about ten minutes for a car to increase 20 degrees in temperature.

To sense a child in the cabin of a vehicle, a camera sensor can be used. If the child is in the field of view of the camera sensor, the child can be directly detected from the image data captured by the camera sensor by a vision algorithm of object detection. However, in order to sense the child in the field of view of a camera sensor, it might be necessary to have several camera sensors in different positions in the vehicle to cover the full cabin. Other sensors like radar sensors can detect through materials and be used in the cabin. Such sensors are more flexible in terms of positioning. But many vehicles are not equipped with such radar sensors to monitor the interior of the cabin.

In many situations, it is not possible to directly sense the child with the sensor(s) in the vehicle, in particular if there is a limited number of camera sensors in the cabin. For example, in a vehicle equipped with only one camera sensor positioned in the front of the cabin and directed to the back, it is not possible to directly detect a child that is in a back-seat rear facing.

Therefore, there is a need to solve the problem of overcoming the limitation of direct object visibility to detect the presence of a child, and more generally the presence of an object for attention, in a vehicle. In other words, there is a need for facilitating the detection of the presence of an object for attention in the vehicle in various situations, including situations in which there is no direct visibility of the object for attention from an image sensor device in the vehicle.

### SUMMARY

The present disclosure concerns a computer-implemented method for detecting the presence of an object for attention in a vehicle including:
receiving data captured by at least one sensor device in the vehicle, processing the received data to collect a plurality of pieces of cue information that are indicative of the presence of said object for attention in the vehicle with a certain degree of uncertainty;
computing a confidence value for the presence of said object for attention in the vehicle, wherein the more pieces of cue information are collected the more the confidence value is increased;
comparing the confidence value with a threshold and detecting the presence of said object when the confidence value exceeds said threshold.

The present method allows to collect pieces of cue information suggesting that the object for attention is present in the vehicle and accumulate likelihoods that the object for attention is present in the vehicle based on cues that are fused. The confidence value is built over time, typically while the vehicle is driving. It is compared to a threshold value and, when the confidence value reaches and/or exceeds the threshold, it is considered as sufficiently high to determine that the object for attention is present in the vehicle. The pieces of cue information can be of different types.

In an embodiment, the method further includes a step of estimating and tracking a body pose of a person in the vehicle from image data captured by an image sensor device to determine a behaviour of said person towards the object for attention

A task of estimating and tracking a body pose of a person in the vehicle (driver or passenger) can be performed to determine one or more pieces of cue information related to a body behaviour of the person towards the object for attention, for example turning around to a child seat several times in a journey of the vehicle.

In an embodiment, the method further includes a step of detecting the presence of one or more objects ancillary to said object for attention, from data captured by an image sensor device. For example, when a child is on board, the image sensor device can capture images including a toy, a child equipment or any other object possibly correlated with the presence of a child in the vehicle. The detection of an object ancillary to the object for attention in the vehicle provides a piece of cue information for the presence of a child in the vehicle.

The object for attention being a child, the method further includes a step of analyzing a content played by an infotainment system of the vehicle so as to determine if said content is a specific content for children. If a content played by the infotainment system of the vehicle can be classified as a content specific for children, it provides a cue information for the presence of a child in the vehicle.

In an embodiment, the method further includes a step of reading in memory an information of presence of said object for attention in a user profile or in a driving history of the vehicle.

The vehicle can have in memory a user profile of the driver (or other passenger) indicating that the driver has children, or a driving history indicating the presence of a child with the driver several times in the past. Such information is a piece of cue information for the presence of a child in the vehicle.

In an embodiment, the object for attention being a child, the method further includes a step of detecting movements in a child seat region from data captured by a sensor device. The detection of movements in the region of a child seat provides a cue information for the presence of a child in the vehicle.

In an embodiment, the object for detection being a child, the method further includes a step of detecting an action of inserting a child through an open door from data captured by one or more sensor devices. The detection of the action of inserting a child into the vehicle also provides a cue information for the presence of a child in the vehicle.

In an embodiment, the object for detection being a child, the method further includes a step of analyzing captured audio data and classifying the audio data as a child voice. The detection of a child voice in captured audio data into the vehicle also provides a cue information for the presence of a child in the vehicle.

In an embodiment, the plurality of pieces of information collected includes different types of pieces of cue information, and different weights are attributed to the different types of pieces of cue information to increase the confidence value.

In another embodiment, the plurality of pieces of cue information are provided as inputs to a machine learning module that performs a task of computing the confidence value. A machine learning module, for example a neural network, can be trained to detect the presence of the object for attention from the pieces of cue information collected (and/or from data captured by sensor device(s) in the vehicle). Such a detection is very flexible over time and efficient.

In an embodiment, the method further includes a step of warning a person of the vehicle of the presence of the object for attention in the vehicle. The warning action can include displaying a flag on a display in the vehicle and/or outputting an alert (light and/or sound alert) when the person in the vehicle leaves the vehicle without the object for attention.

The method can further includes a step of detecting that said object for attention is left in the vehicle after the one or more passengers left the vehicle from data captured by a sensor device, that triggers the execution of the step of warning.

The present disclosure also concerns a data processing device for detecting the presence of an object for attention in a vehicle including
a receiving unit for receiving data including data captured by at least one sensor device in the vehicle;
and a processing unit adapted to execute the steps of the method previously defined.

The present disclosure also concerns:
- a computer program including instructions to cause the data processing device above defined to execute the steps of the method previously defined;
- a computer-readable medium having stored thereon the computer program;
- a vehicle including the data processing device above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a flowchart of a method for detecting the presence of an object for attention in a vehicle according to an embodiment.
Figure 2 shows a flowchart of a method for detecting the presence of an object for attention in a vehicle according to another embodiment.
Figure 3 shows a functional block diagram of a data processing device for detecting the presence of an object for attention in a vehicle according an embodiment.

### DETAILED DESCRIPTION

The present disclosure concerns a computer-implemented method for detecting and managing the presence of an object for attention in a vehicle, for example a car, and a data processing device 100 including a receiving unit 10 for receiving data including data captured by one or more sensor devices in the vehicle and a processing unit 20 for executing the steps of the computer-implemented method. The processing unit 20 includes one or more software modules of program instructions running on the processing unit 20 for implementing the different tasks described below, that are performed by the processing unit 20.

The object for attention can include a child, an animal, a cell phone, a wallet, a purse, a luggage, a computer, or any other type of object that requires attention from a person (driver and/or other passenger) in the vehicle.

The software modules can include an object or person detection module, a tracking body module, an audio analyzer, and/or any other appropriate functional module to implement the tasks described below. In an embodiment, the software modules include one or more machine learning modules trained to execute one or more tasks.

The vehicle is equipped with one or more sensor devices. In an embodiment, the in-vehicle sensor devices include at least one image sensor device, for example a camera sensor device and/or a radar sensor. Optionally, the sensor devices include an audio sensor device, a door sensor sensing the opening and closing of the vehicle doors, a motion sensor, or any other type of appropriate sensor device.

The computer-implemented method allows to indirectly detect the presence of an object for attention in the vehicle and can be used in a situation in which there is no direct visibility of the object for attention from an image sensor device of the vehicle.

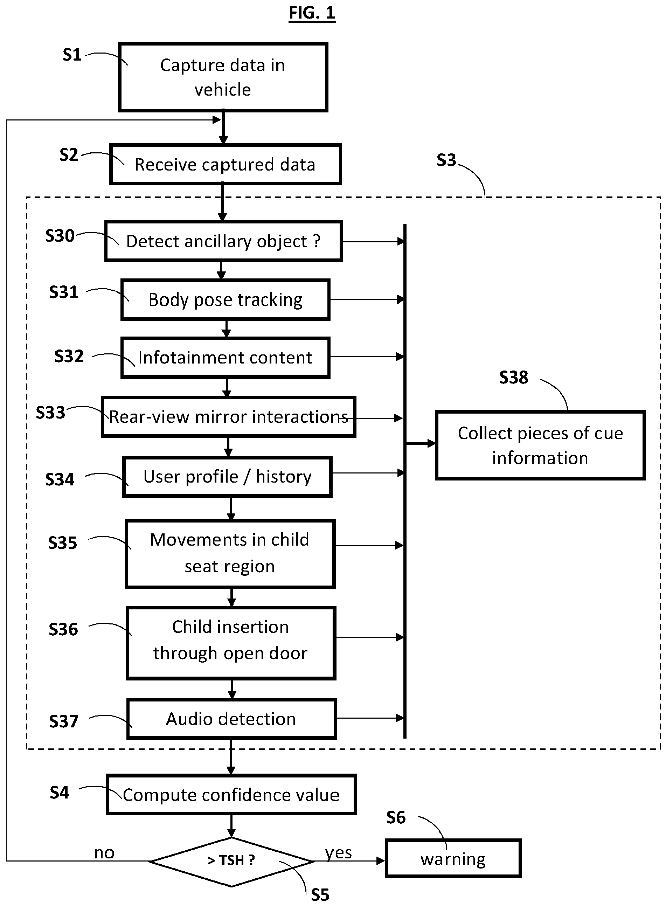

An embodiment of the method for detecting the presence of an object for attention in a vehicle will now be described with reference to figure 1. For example, the vehicle is equipped with one camera sensor device 30 positioned in the front of the cabin of the vehicle and directed to the back and door sensor devices 40 for sensing the opening and closing of the vehicle doors.

In a sensing step S1, the sensor devices 30, 40 of the vehicle capture data. The sensing step S1 can be performed continuously when the vehicle is driven, and even when it is stopped. More precisely, in the present embodiment, the camera sensor device 30 captures images of the interior of the cabin of the vehicle, within a given field of view. For example, the captured images cover the two front seats, the interior of the two front doors, and partially the back seats. The sensor devices 40 detects the opening and closing of each vehicle door.

In a step S2, the data captured by each of the sensor devices 30, 40 is transmitted to the data processing device 100. The data can be transmitted to the device 100 over time (typically, in real time, as it is captured). The receiving unit 20 of the device 100 receives the data captured by each of the sensor devices 30, 40.

In a step S3, the received data is processed by the processing unit 20 to collect a plurality of pieces of cue information. The data can be captured at successive points in time and then processed over time to accumulate different pieces of cue information over time.

A piece of cue information is a piece of information that is indicative of (in other words: suggests) the presence of said object for attention in the vehicle with a certain degree of uncertainty. It means that the piece of cue information is possibly correlated with the presence of the object for attention in the vehicle. It is not a direct and certain detection of the object for attention, for example by a direct detection of the object for attention from an image captured by an image sensor device. It indicates a likelihood that the object for attention is present.

The step S3 of processing the data received by the receiving unit 10 includes the execution, by the processing unit 20, of different types of tasks of detection using the received data to determine pieces of cue information. A non-exhaustive list of the tasks of detection is given below:
- detection of objects correlated with the presence of the object for attention;
- estimation and tracking of body pose of a driver and/or passenger in the vehicle to detect a specific behaviour of a person towards the object for attention ;
- classification of an infotainment content played by an infotainment system of the vehicle;
- detection of rear-view mirror checks and/or adjustments;
- identification of a presence information of the object for attention in a user profile and/or driving history;
- detection of movements in a child seat region;
- detection of an action of inserting a child into the vehicle through an open door;
- voice or audio detection.

Thus, the step S3 can include a step S30 of detecting and classifying objects ancillary to the object for attention, suggesting the presence of the object for attention in the vehicle. For example, in case that the object for attention is a child, the ancillary objects can include a child seat, a booster seat, toy(s), any other baby or kid equipment, etc..... In an embodiment, the ancillary objects are detected by the processing unit 20 from image data captured by the camera sensor device 30. In that case, the processing unit 20 implements a function (task) of object detection. Optionally, the processing unit can use data from a sensor for detecting a state attached or non-attached of a child seat.

The step S3 can further include a step S31 of estimating and tracking the body pose of a person in the vehicle from image data captured by the camera sensor device 30 to detect a behaviour of said person towards the object for attention. The step 31 is performed by the processing unit 20 executing an algorithm (software component) of body pose tracking to track the body behaviour of the driver or other passenger in the vehicle. In the step S31, the seating position of each person (driver or other passenger) is detected and the body pose of the person is monitored from image data captured by the camera sensor device 30. In an embodiment, key body points (e.g., shoulders, hands, elbows, knees, hip points, facial feature points, etc.) are detected and tracked. The information on the body key points can be two-dimensional or three-dimensional. Then, by monitoring the key body points over time, the processing unit 20 can estimate and track the body pose of the person and detect body movements of turning around, and/or looking or reaching to a child seat. The following elements of information can be further derived from the captured image data: points in time when the person starts and stops turning around, duration the person is turning around, frequency the person is turning around. In case that a child seat is detected at a given position in the vehicle, the processing unit 20 can derive interactions between a person seating in the vehicle and the child seat, based tracking a hand of the person in the proximity of the child seat. Other information as a frequency or duration of the interactions between the person and the child seat can be accumulated and used as pieces of cue information that are indicative of the presence of said object for attention in the vehicle with a certain degree of uncertainty. In another variant, the processing unit 20 can determine a temporal sequence of hand interactions with the child seat or with the child within the child seat. The temporal sequence can further include an action of reaching an object ancillary to the child (such as a toy, a passifier, a book, a bottle, ...) and moving it to the inside of the child seat.

In case that the object for attention is a child, the step S3 further can further include a step S32 of analyzing and classifying an infotainment content (music, video, etc.) played by an infotainment system of the vehicle, to determine whether or not said content is a content specific for children. It can also be determined if the content is inappropriate for children. The analysis and classification of the content can be performed using data captured by an audio sensor, or audio data and/or metadata related to content directly transmitted by the infotainment system to the data processing device 100.

The step S3 can further include a step S33 of detecting an adjustment of the rear-view mirror by the driver, which suggests that the driver is putting importance on using the rear-view mirror. Optionally, it can be further detected that the rear-view mirror is adjusted in a way that the driver gets a better view on and can monitor a given rear seat. The detection S33 can be performed using data from one or more sensors, for example a motion sensor and/or acceleration sensor, for deriving the absolute position and orientation of the rear-view mirror, in particular in case of a rear-view mirror with manual adjustment. Alternatively, the rear-view mirror can be controlled with an electronic adjustment. In that case, a deviation between an ideal position to see the road through the rear-view mirror and the ideal position to see a given rear seat can be computed and used to adjust the position of the rear-view mirror. The deviation information can be used as a piece of information suggesting the presence of an object for attention in the vehicle.

The step S3 can further include a step S34 of reading in memory an information of presence of the object for attention in a user profile or in a driving history of the vehicle. The history of presence of the object for attention in the vehicle can be stored in memory. It can be associated with a person like a driver of the vehicle. In addition, or alternatively, an information of presence of the object for attention can be part of a user profile of a driver or passenger, that is stored in memory. The information of presence of the object for attention in the driving history and/or in the user profile can optionally be combined with timing information and/or location information such as GPS traces (that correspond to patterns of picking up kids from school for example).

In case that the object for attention is a child, the step S3 can further include a step S35 of detecting movements in a child seat region. Any movement within the region of a seat with a child seat detected increases the probability that a child is in the child seat. For example, trackable feature points are detected in the region of the child seat and in the surrounding area from captured image data. Movements (feature displacements in the captured image data) inside the child seat regions are compared to movements outside the seat region. The average movement outside the child seat region is subtracted from the movements in the inside of the child seat region. The remaining delta corresponds to movements that are specific to the child region. It can further be fed into a classification module that distinguishes typical movements induced by a child from other movements induced by vehicle motions.

In case that the object for attention is a child, the step S3 can further include a step S36 of detecting an action of inserting a child into the vehicle through an open door from data captured by the image data captured by the camera sensor device 30. In an embodiment, the field of view of the camera sensor device 30 has at least a partial view on the vehicle doors and a person outside the cabin can be detected from the image data captured by the camera sensor device 30. Optionally, by processing the captured image data, it can be determined that:
- one or more parts of the body of the outside person reach into the cabin (e.g., arms or hands);
- a child, for example a baby, is inserted into a seat region.

In a variant, when a person inserts a child, for example a baby, into the vehicle, the processing unit 20 detects the child while still in the field of view of the camera sensor device 30, before hiding it in a child seat.

The above detections can also be combined. For example, the processing unit 20 can detect a baby or child when it is inserted into the vehicle and, in combination, a person outside the car next to the child seat.

Such detections can be performed by a function of object detection and/or a function of estimating and tracking human body key points, implemented on the processing unit 20 and using the image data captured by the camera sensor device 30.

The processing unit 20 can further use data related to the door opening state, captured by the sensor device 40, and/or corresponding signals on a vehicle message bus.

The step S3 can further include a step of audio detection S37. A microphone device can be used to capture audio signals in the cabin. The captured audio signals are then analyzed by the processing unit 20 to detect for example:
- special sounds related to a child or baby (e.g., screaming, crying, or laughter of a baby); and/or
- key words suggesting that a person in the vehicle is talking with a child (child name, a specific language, etc.).

The processing unit can further classify a speaker age from the captured audio signals.

The tasks of detection S30 to S37 are performed over time in any order. They provide a plurality of pieces of cue information over time, each piece of cue information having a certain degree of uncertainty (related to the presence of the object for attention in the vehicle). The plurality of pieces of information provided by the different detection tasks are collected (in other words: accumulated) in a step S38.

The method further includes a step S4 of generating a confidence value for the presence of the object for attention in the vehicle.

The confidence value is a value representing a likelihood for the object for attention to be present in the vehicle. In an embodiment, it is a probability expressed in percentage or a value between 0 and 1. For example, a probability of 100% means that the object for attention is certainly present in the vehicle and a probability of 0% means that the object for attention is certainly not present in the vehicle. In another embodiment, the confidence value can be scaled in a different manner.

The confidence value is generated by the processing unit 20 in such a way that the more pieces of cue information are collected the more the confidence value is increased. In an embodiment, for any of the pieces of cue information detected in the step S3 (by one or more of the detections of the steps S30 to S37), the confidence value is increased by a certain amount. The amount of increase resulting from a piece of cue information can be fixed or depend on an uncertainty related to said piece of cue information.

Optionally, the confidence value is decreased in that that a piece of cue information suggesting that the object for attention is not present in the vehicle. For example, when a content that is inappropriate for children is played by the infotainment system of the vehicle and detected by the processing unit 20 in the step S32, the confidence value can be decreased by a certain amount.

In an embodiment, the confidence value is computed by a computation algorithm that is implemented by a program (software module). Different types of computation algorithms can be used. For example, the algorithm attributes a predefined amount of increase to each type of piece of cue information. The amount of increase can depend on the degree of uncertainty on the presence of the object for attention associated with said type of piece of cue information. For example, the amount of increase is higher in case of frequent detections of a movement of turning around of the driver towards the child seat than in case of detection of a toy. Additionally, or alternatively, the computation algorithm attributes different weights to the different types of pieces of cue information detected, typically based on their respective degrees of uncertainty.

In another embodiment, the confidence value is computed by a machine learning module that receives as input conditions a plurality of pieces of cue information collected in the step S3 including the one or more detection steps S30 to S36. The machine learning module can be trained with training data including:
- input training data including a plurality of sets of pieces of cue information detected in a vehicle, each set of pieces of cue information corresponding a scenario recorded in the past in a recording vehicle, and
- output training data including, for each set of pieces of cue information, a confidence value for the presence of the object for attention in the vehicle, attributed manually for the corresponding scenario.

Alternatively, instead of receiving as input data the pieces of cue information detected in the step S3, the machine learning module could receive as input data the data received by the receiving unit 10, including the data captured by one or more sensor devices in the vehicle. In that case, the machine learning module performs the tasks of detecting the pieces of cue information from the data received by the receiving unit 20 and the task of computing the confidence value resulting for the detections.

After computing the confidence value for the presence of the object for attention in the vehicle, the method further includes a step S5 of comparing the confidence value with a predetermined threshold and detecting the presence of the object for attention when the confidence value exceeds said threshold.

The task S5 of comparing the confidence value with a threshold and detecting the presence of the object for attention in case that the confidence value reaches or exceeds the threshold is performed by a software module (or program instructions) running on the processing unit 20. The task S5 could be performed by the machine learning module that computes the confidence value.

In an embodiment, in case of detection of an object for attention in the vehicle in the step S5, the method further includes a step S6 of warning a passenger of the vehicle of the presence of the object for attention in the vehicle, using output means 50 of the vehicle. The step of warning S6 can include displaying a flag indicating for example "child on board" (in case the object for attention is a child) on a display of the vehicle. Alternatively, or additionally, the task of warning S6 includes outputting an audio and/or light signal by the vehicle to warn the person in the vehicle when said person leaves the vehicle and the object for attention is left in the vehicle. In a variant, a warning can be triggered on a mobile phone of the driver.

The steps S2 to S5 of indirect detection of the object for attention are looped over time on new captured data to determine and check the confidence value. In an embodiment, once the confidence value has reached the threshold, the steps S2 to S5 are only partially executed or are not executed any more. In another embodiment, the steps S2 to S5 continue to be executed even after reaching the threshold. It allows to monitor further interactions with one or more objects

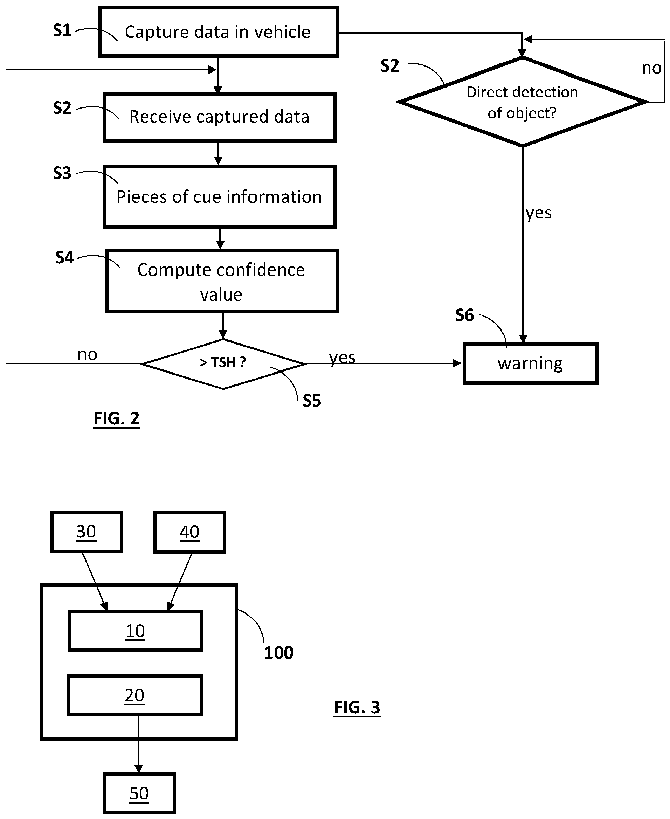

In an embodiment, the method further includes a step of direct detection of the object for attention in the vehicle, as shown in figure 2. The object for attention can be detected directly, with certainty, from data captured by one or more image sensor devices in the vehicle, for example by the camera sensor device 30. The direct detection of the object for attention can be executed by a software module running on the processing unit 20 and executing a vision algorithm to analyze the captured image data and determine if the object for attention is visible (present) in the image(s) captured. If the object for attention is detected directly, the steps S2 to S5 of indirect detection of the object for attention, based on the accumulation of pieces of cue information and computation of a confidence value for the presence of the object in the vehicle, are not executed or only partially executed. However, the step S6 of warning is executed in case of direct detection of the object for attention.

## Claims

1. A computer-implemented method for detecting the presence of an object for attention in a vehicle including:
receiving data captured by at least one sensor device (30, 40) in the vehicle, processing (S3) the received data to collect a plurality of pieces of cue information that are indicative of the presence of said object for attention in the vehicle with a certain degree of uncertainty;
computing (S4) a confidence value for the presence of said object for attention in the vehicle, wherein the more pieces of cue information are collected the more the confidence value is increased;
comparing (S5) the confidence value with a threshold and detecting the presence of said object when the confidence value exceeds said threshold.

2. The method according to claim 1, further including a step (S31) of estimating and tracking a body pose of a person in the vehicle from image data captured by an image sensor device (30) to determine a behaviour of said person towards the object for attention.

3. The method according to claim 1 or 2, further including a step (S30) of detecting the presence of one or more objects ancillary to said object for attention, from data captured by an image sensor device.

4. The method according to any of claims 1 to 3, wherein, the object for attention being a child, the method further includes a step (S32) of analyzing a content played by an infotainment system of the vehicle so as to determine if said content is a specific content for children.

5. The method according to any of claims 1 to 4, further including a step (S34) of reading in memory an information of presence of said object for attention in a user profile or in a driving history of the vehicle.

6. The method according to any of claims 1 to 5, wherein, the object for attention being a child, the method further includes a step (S35) of detecting movements in a child seat region from data captured by a sensor device.

7. The method according to any of claims 1 to 6, wherein, the object for detection being a child, the method further includes a step (S36) of detecting an action of inserting a child through an open door from data captured by one or more sensor devices.

8. The method according to any of claims 1 to 7, wherein, the object for detection being a child, the method further includes a step of analyzing (S37) captured audio data and classifying the audio data as a child voice.

9. The method according to any of claims 1 to 8, wherein the plurality of pieces of information collected includes different types of pieces of cue information, and different weights are attributed to the different types of pieces of cue information to increase the confidence value.

10. The method according to any of claims 1 to 8, wherein the plurality of pieces of cue information are provided as inputs to a machine learning module that performs a task of computing the confidence value.

11. The method according to any of claims 1 to 10, further including a step (S6) of warning a person of the vehicle of the presence of the object for attention in the vehicle.

12. The method according to claim 11, further including a step of detecting that said object for attention is left in the vehicle after the one or more passengers left the vehicle from data captured by a sensor device, that triggers the execution of the step of warning.

13. A data processing device for detecting the presence of an object for attention in a vehicle including
a receiving unit for receiving data including data captured by at least one sensor device in the vehicle;
and a processing unit adapted to execute the steps of the method according to any of claims 1 to 12.

14. A computer program including instructions to cause the device of claim 12 to execute the steps of the method of any of claims 1 to 13.

15. A vehicle including the device according to claim 13.
